# EUROPEAN PATENT SPECIFICATION

(11) **EP 1 266 565 B1**
(45) Date of publication and mention of the grant of the patent: **24.03.2004**
(21) Application number: 02012673.6
(22) Date of filing: 07.06.2002
(51) Int. Cl.: A01K 1/12

(54) **Device and method for illuminating milking parlor stalls**
Vorrichtung und Verfahren zur Beleuchtung des Melkstands
Dispositif et méthode pour éclairer les stalles de traite

(30) Priority: 13.06.2001 US 880372
(43) Date of publication of application: 18.12.2002
(73) Proprietor: Bou-Matic Technologies Corporation, Houston, Texas 77019 (US)
(72) Inventor: Eppers, Paul A., Madison, Wisconsin 53703 (US); Prazak, Josep G., Sun Prairie, Wisconsin 53590 (US); Vrieze, Josh J., Madison, Wisconsin 53703 (US)
(74) Representative: Gesthuysen, von Rohr & Eggert

(56) References cited:
- EP-A- 0 549 324
- WO-A-00/11936
- US-A- 2 305 259
- US-A- 2 610 608
- US-A- 5 638 768

## Description

The invention relates to milking parlors, and more particularly to improved illumination of the cow's udder.

The invention arose during continuing development efforts in milking parlors, including herringbone, parabone, parallel and rotary parlors, particularly illumination thereof. Lighting fixtures in milking parlors are typically suspended overhead, and the light is not able to reach some of the operator's working area effectively, particularly the cow's udder because it is blocked by the body of the cow, and may also be blocked by various parlor and stall components and structure, i.e., the udder is in the shadows. Much of the operator's time is spent looking underneath the cow at the udder, and hence the shadowed condition causes fatigue and eye strain.

It is known from U.S. Patent 2,610,608 to arrange lighting fixtures on the floor beside the gangway of the cow. Obviously those lighting fixtures are susceptible to damage from the hooves of the cows and to dirt.

Another alternative for arranging the lighting fixtures is shown in the U.S. Patent 2,305,259. Here the lighting fixtures are integrated into the floor of the stalls. Again those lighting fixtures are susceptible to the above stated damage and dirt. The present invention addresses and solves the noted illumination problem in a particularly simple and effective manor. Eye fatigue and strain is reduced, as well as enabling the operator to do a better job of propping and attaching milking cluster units, and also enabling the operator to more readily identify problems with the cow's milk, e.g., mastitis, chunky milk, etc., which in turn increases the overall quality of the milk produced.

### BRIEF DESCRIPTION OF THE DRAWINGS

- Fig. 1: is a top view of a milking parlor known in the prior art.
- Fig. 2: is a side view taken along line 2-2 of Fig. 1.
- Fig. 3: is a top view of a milking parlor in accordance with the present invention.
- Fig. 4: is a perspective view of the parlor of Fig. 3.
- Fig. 5: is a side view taken along line 5-5 of Fig. 3.
- Fig. 6: is a side view taken along line 6-6 of Fig. 3.
- Fig. 7: is a perspective view of the parlor of Fig. 3 taken from below and in the pit.
- Fig. 8: is a view taken along line 8-8 of Fig. 7.
- Fig. 9: is a view like Fig. 4, and shows an alternate embodiment.
- Fig. 10: is a view taken along line 10-10 of Fig. 9.
- Fig. 11: is a side view of a parlor, and shows an alternate embodiment.

### DETAILED DESCRIPTION OF THE INVENTION

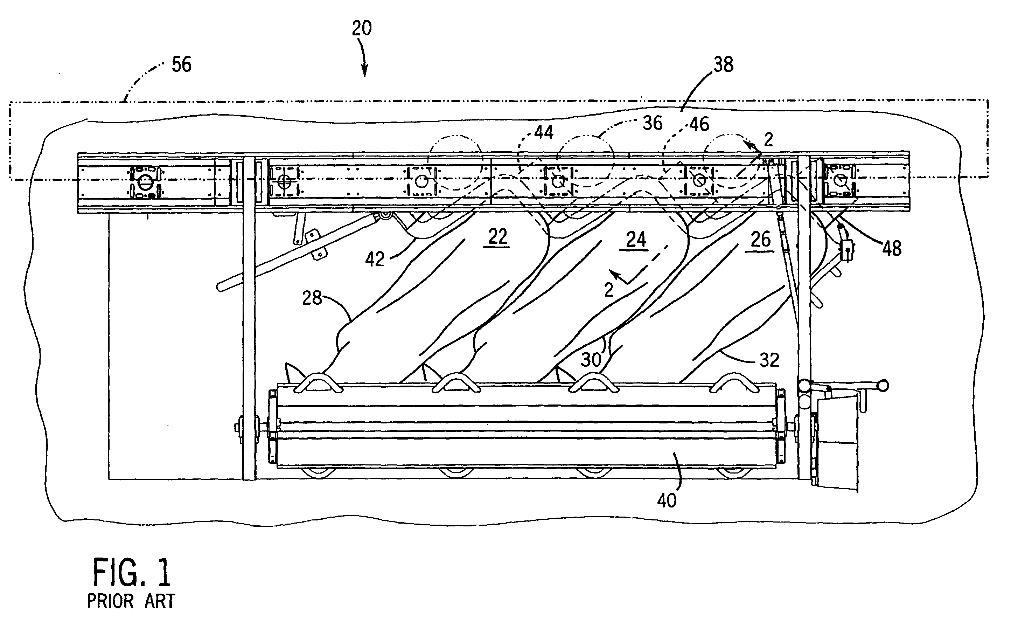

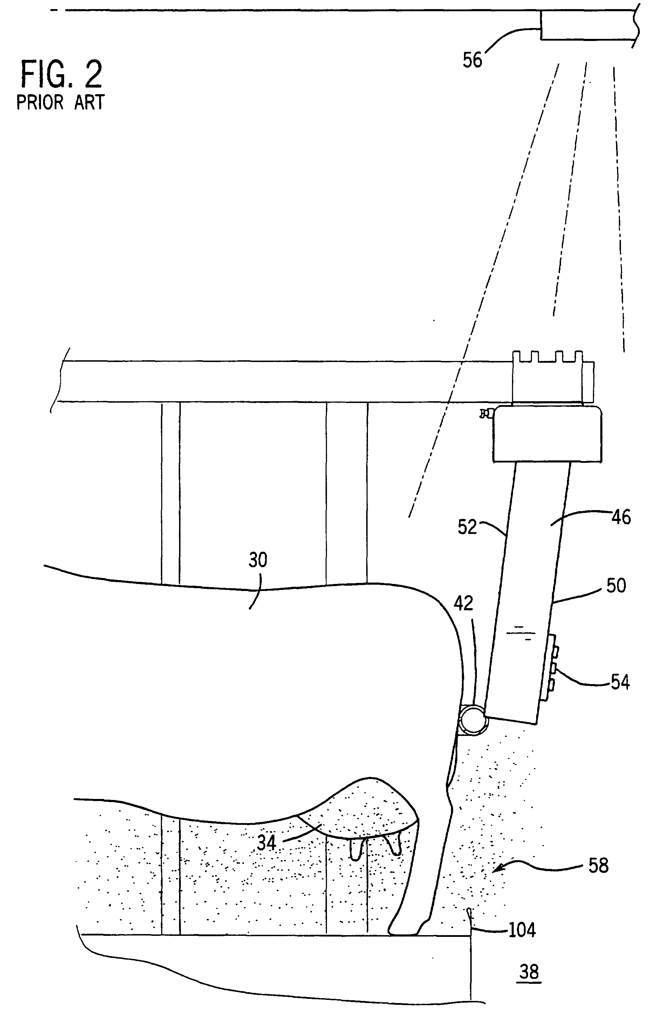

Figs. 1 and 2 show a milking parlor 20 known in the prior art. A plurality of stalls 22, 24, 26 etc., hold cows 28, 30, 32 respectively, etc. such that the cows' udders such as 34, Fig. 2 are accessible to an operator as shown at 36 in pit 38, for which further reference may be had to EP 0 549 324 A1, incorporated herein by reference. The particular parlor shown is of the herringbone type, and movement of the cows into and out of the parlor is controlled by exit gate or reel 40, corresponding to gate 20 in the noted reference. The stalls have a zigzag or S-shape rump rail 42 corresponding to rump rail 16 in the noted reference. The stalls have cabinets 44, 46, 48, etc. with a front control panel such as 50 facing the operator, and a rear splash panel 52 facing the rump of the cow. The control panel typically includes a key pad 54 or the like for various control functions for that stall, such as retraction or extension of the milking cluster including the claw and teatcups (not shown), application of milking vacuum, pulsation vacuum, etc., all as is known.

Lighting fixtures such as 56 are suspended overhead. As shown in Fig. 2 the light beams from light 56 cannot effectively reach the cow's udder 34 because the light is blocked by the body of the cow above the udder and/or portions of the stalls therebetween, resulting in shadowed region 58 as shown by stippling.

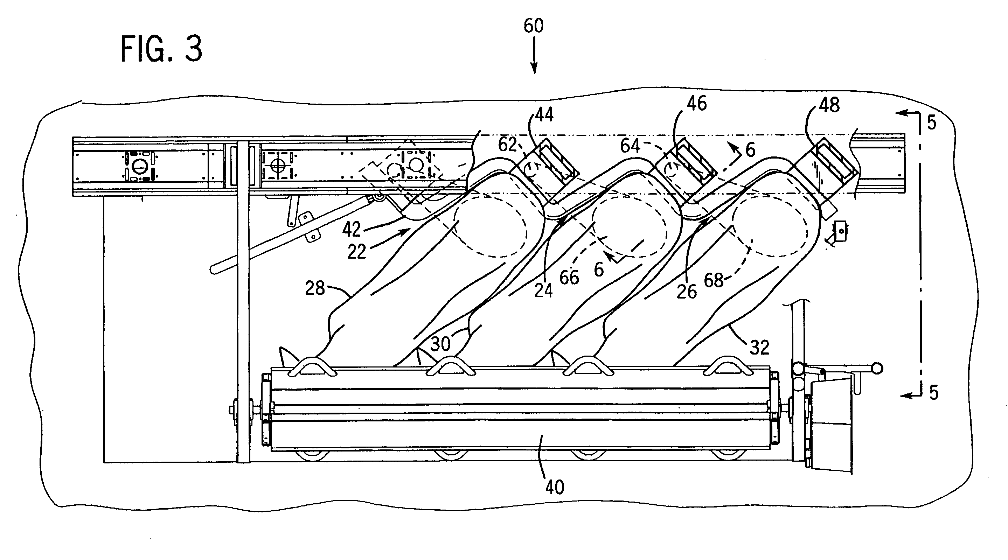

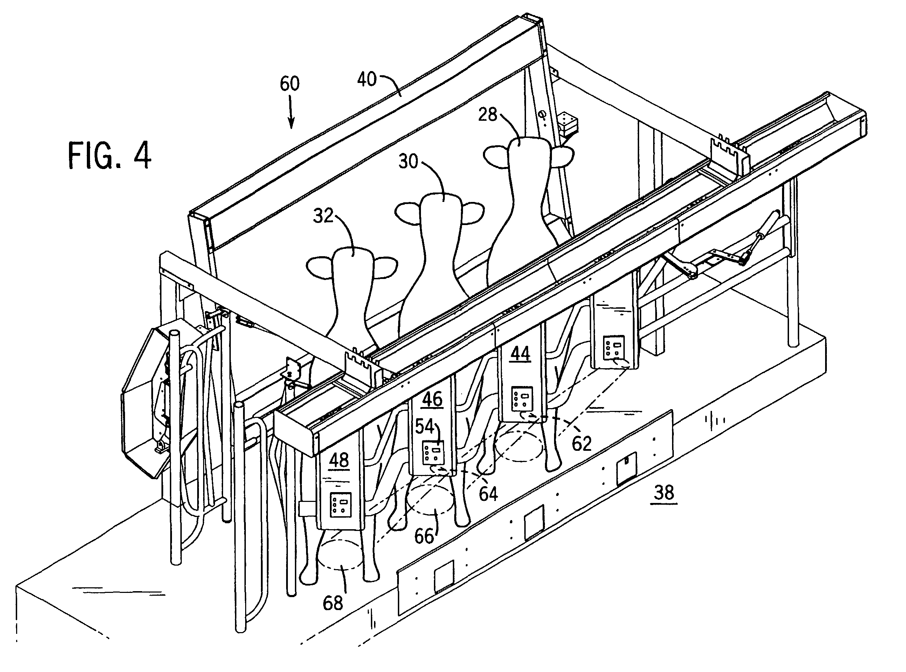

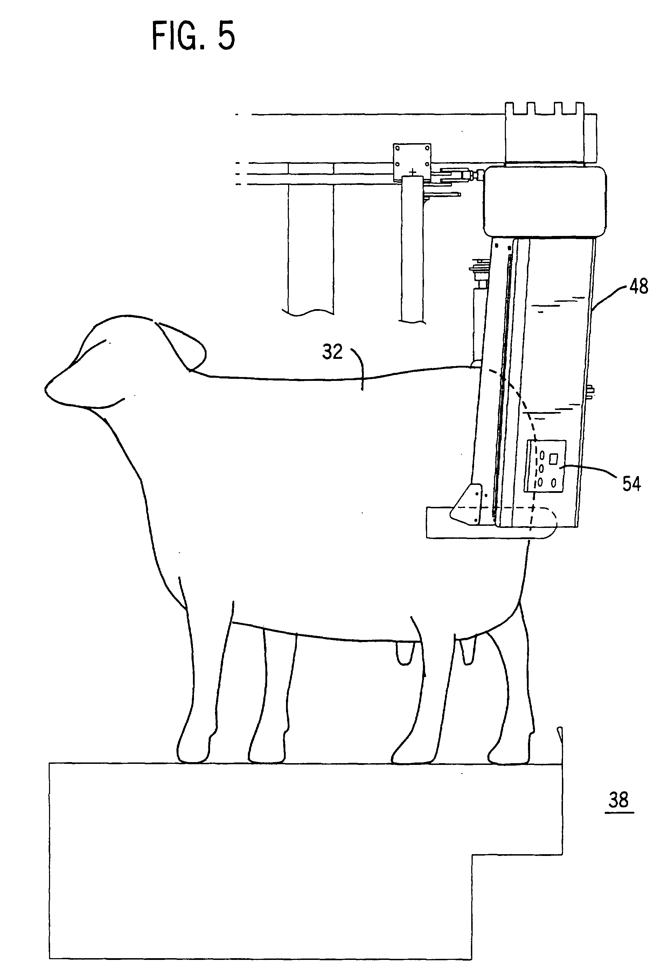

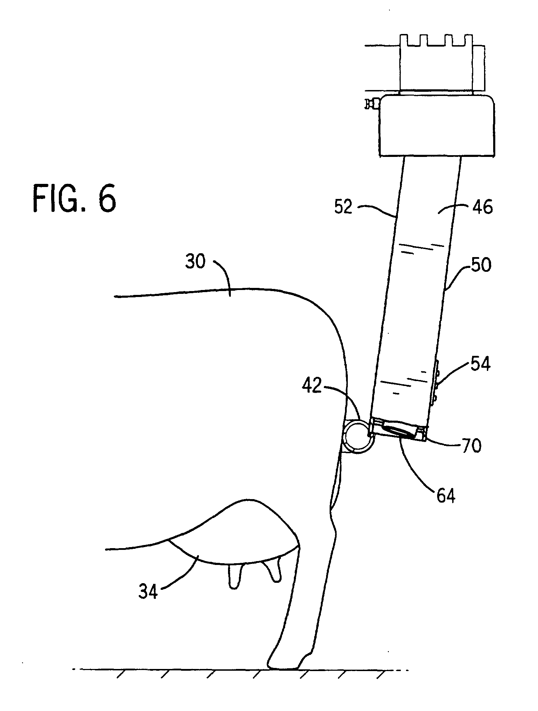

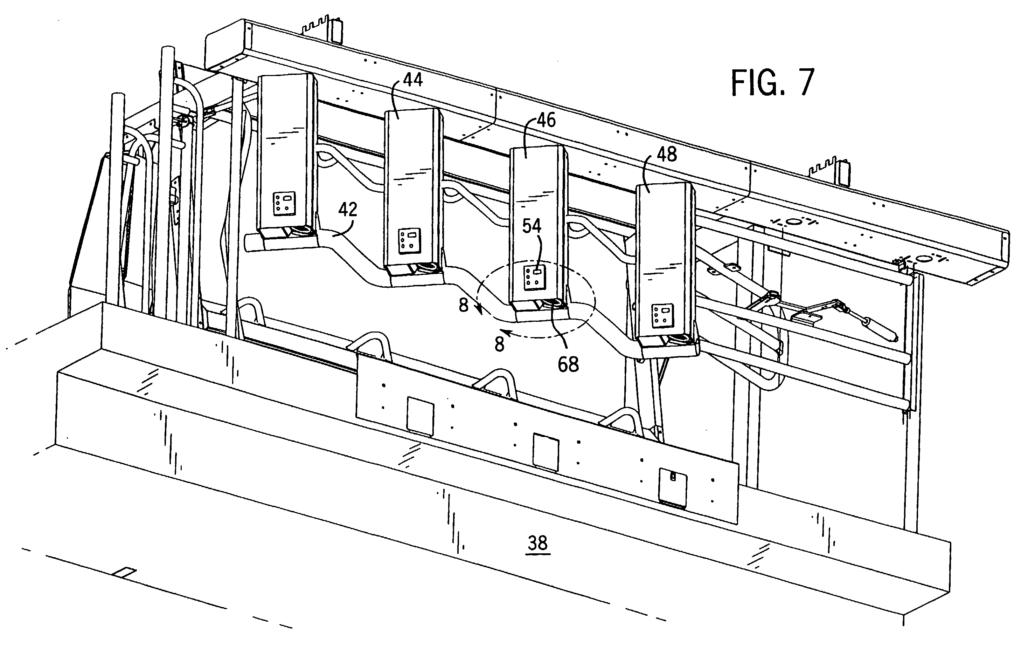

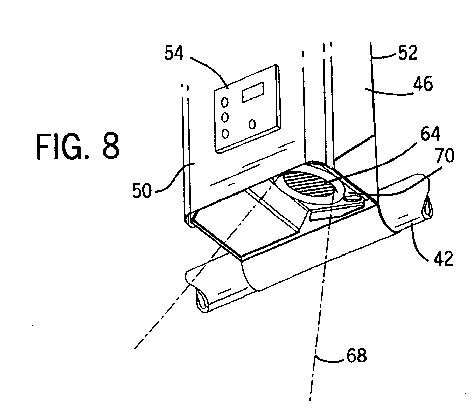

Figs. 3-11 illustrate the present invention and use like reference numerals from above where appropriate to facilitate understanding. Stalls 22, 24, etc. in milking parlor 60 in Fig. 3 have lights 62, 64, etc., directly illuminating the cows' udders for viewing by the operator in the pit, as shown at respective illumination regions 66, 68, etc., Figs. 3, 4, 6. The lights are beneath the noted splash panels such as 52 of the stalls, Fig. 6, and direct light beams downwardly and diagonally toward the udder of the cow in the adjacent stall. The lights are mounted to the splash panels at a location above the udder, Fig. 6, and below the top of the rump of the cow. The stalls have the noted cabinets 44, 46, etc., with the noted front control panel such as 50, Figs. 6, 8, facing the operator in the pit, the rear splash panel 52 facing the rump of the cow, and a bottom 70 extending between control panel 50 and splash panel 52 and facing downwardly. The lights such as 64 are mounted to the cabinet bottoms such as 70.

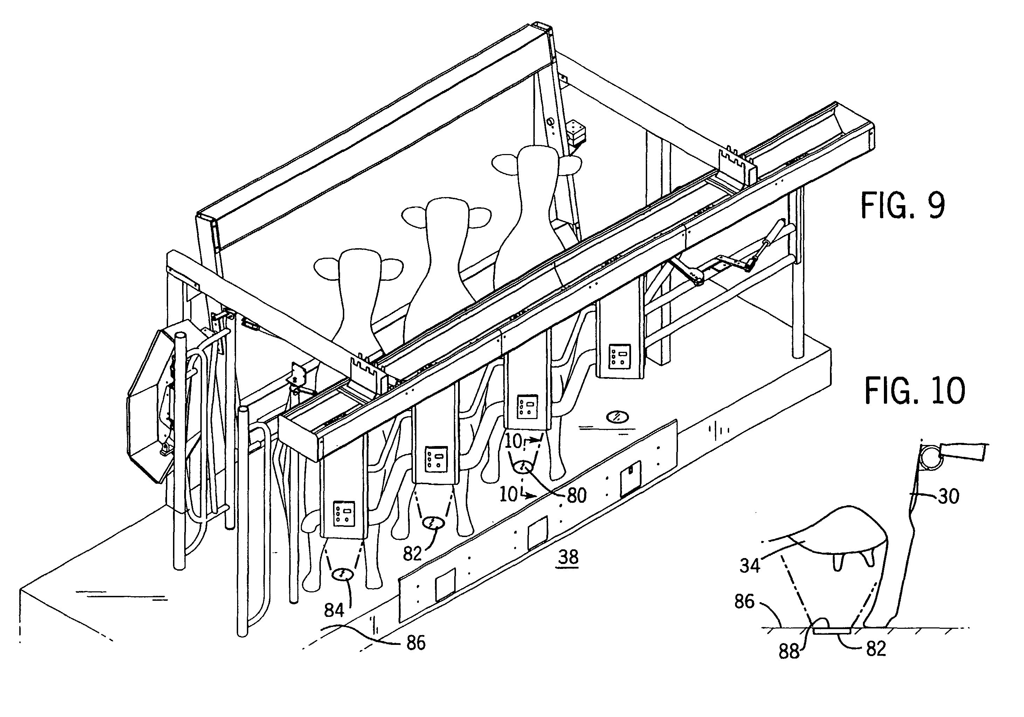

In an alternate embodiment, Figs. 9, 10, additional lights 80, 82, 84 are in the floor 86 of the stalls. Lights 80, 82, 84 direct light beams upwardly toward the cows' udders. The lights have upper surfaces such as 88, Fig. 10, flush with floor 86, so that the cows do not trip over the lights.

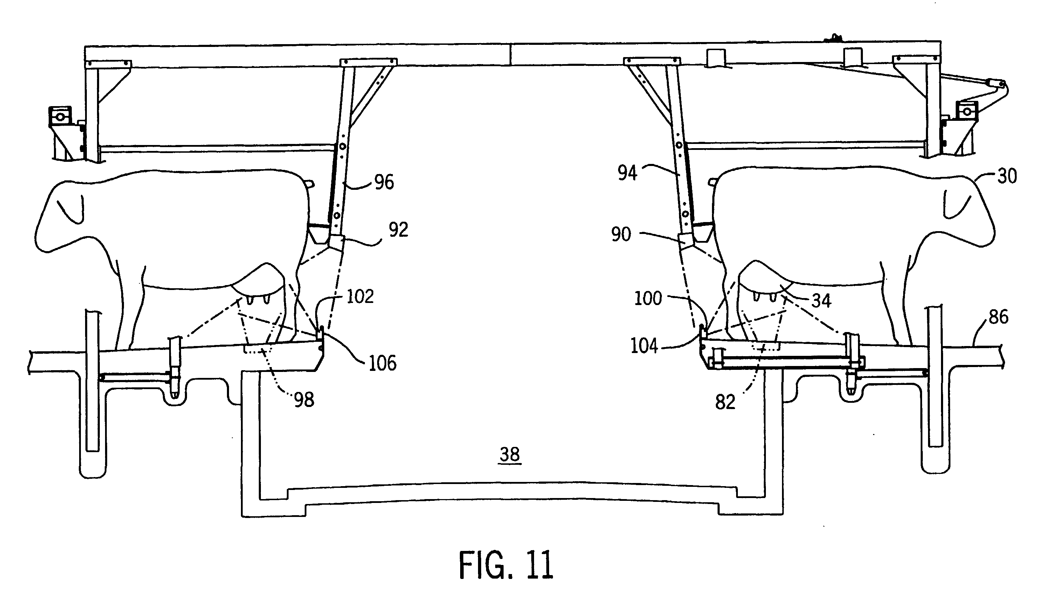

In a further embodiment as shown in Fig. 11, lights such as 90, 92 are mounted to stall rump rails 94, 96 and direct light beams downwardly and diagonally toward the cows' udders and away from the pit. Lights such as 82, 98 are additionally provided in the floor in Fig. 11 and/or Figs. 3-8. In a further embodiment, lights such as 100, 102, are provided on curbs 104, 106, Figs. 11, and direct light beams upwardly and diagonally toward the cows' udders and away from the pit.

The lights in Figs. 3-11 are spaced from the cows' udders along illumination paths including a plurality of rectilinear paths unblocked by the cows' body above the udder. It is preferred that as many of such rectilinear paths between the lights and the udders also be unblocked by any other portion of the cow therebetween and unblocked by any other portion of the stall therebetween.

## Claims

1. A milking parlor comprising a plurality of stalls (22, 24) for holding cows such that the cow's udders are accessible to an operator in a pit, wherein said stalls (22, 24) have lights (62, 64) directly illuminating said udders for viewing by said operator
**characterized in that**
said stalls (22, 24) have splash panels (52) at the rumps of the cows, and that said lights (62, 64) are mounted to said splash panels (52) at a location above the udder and below the top of the rump.

2. Milking parlor according to claim 1 **characterized in that** said lights (62, 64) are beneath said splash panels (52),
and/or, preferably, that said stalls (22, 24) have cabinets (44, 46) with a front control panel (50) facing said operator, said splash panel (52) on the rear facing the rump of the cow, and a bottom (70) extending between said control panel (50) and said splash panel (52) and facing downwardly and that said lights (62, 64) are mounted to said cabinet bottoms (70).

3. Milking parlor according to claim 1 or 2 **characterized in that** said lights (62, 64) direct light beams downwardly and diagonally toward said udders, preferably, that said lights (62, 64) direct light beams toward the udder of a cow of an adjacent stall (22, 24).

4. Milking parlor according to any one of the preceding claims **characterized in that** said stalls (22, 24) have a floor (86), and that additional lights (80, 82, 84) are in said floor (86),
preferably, that said additional lights (80, 82, 84) direct light beams upwardly toward said udders,
further preferably, that said additional lights (80, 82, 84) have an upper surface (88) flush with said floor (86).

5. Milking parlor according to any one of the preceding claims **characterized in that** said stalls (22, 24) have a curb (104, 106) along said pit, and that additional lights (100, 102) are along said curb (104, 106),
preferably, that said additional lights (100, 102) direct light beams upwardly and diagonally toward said udders and away from said pit.

6. Milking parlor according to any one of the preceding claims **characterized in that** said lights are spaced from said udders along illumination paths comprising a plurality of rectilinear paths unblocked by the cow's body above the udder,
preferably, that said rectilinear paths between said lights and said udders are unblocked by any other portion of the cow therebetween,
and/or, preferably, that said rectilinear paths between said lights and said udders are unblocked by any other portion of the stall therebetween.

## Patentansprüche

1. Melkstand mit einer Mehrzahl von Ständen (23, 24) für die Fixierung von Kühen, so daß die Kuheuter für einen Bediener in einer Bedienergrube erreichbar sind, wobei die Stände (22, 24) Lichtquellen (62, 64) aufweisen, die die Euter für eine Betrachtung durch den Bediener direkt beleuchten,
**dadurch gekennzeichnet,**
**daß** die Stände (22, 24) Kotbleche (52) am Rumpf der Kühe aufweisen und daß die Lichtquellen (62, 64) an den Kotblechen (52) an einem Platz über dem Euter und unter der Oberkante des Rumpfes angebracht sind.

2. Melkstand nach Anspruch 1, **dadurch gekennzeichnet, daß** sich die Lichtquellen (62, 64) unter den Kotblechen (52) befinden,
und/oder, vorzugsweise, daß die Stände (22, 24) Gehäuse (44, 46) aufweisen mit einem vorderen dem Bediener gegenüberliegenden Steuerpanel (50), wobei die Kotbleche (52) an der Rückseite dem Rumpf der Kuh gegenüberliegend angeordnet sind und mit einer Unterseite (70) zwischen dem Steuerpanel (50) und dem Kotblech (52), wobei die Unterseite (70) nach unten gerichtet ist und die Lichtquellen (62, 64) an den Unterseiten (70) der Gehäuse befestigt sind.

3. Melkstand nach Anspruch 1 oder 2, **dadurch gekennzeichnet, daß** die Lichtquellen (62, 64) Lichtstrahlen nach unten und diagonal in Richtung der Euter lenken,
vorzugsweise, daß die Lichtquellen (62, 64) die Lichtstrahlen in Richtung des Euters einer Kuh im benachbarten Stand (22,24) lenken.

4. Melkstand nach einem der voranstehenden Ansprüche, **dadurch gekennzeichnet, daß** die Stände (22, 24) einen Boden (86) aufweisen und daß sich in dem Boden (86) zusätzliche Lichtquellen (80, 82, 84) befinden,
vorzugsweise, daß die zusätzlichen Lichtquellen (80, 82, 84) die Lichtstrahlen nach oben in Richtung der Euter lenken,
weiter vorzugsweise, daß die zusätzlichen Lichtquellen (80, 82, 84) eine Oberfläche (88) aufweisen, die ebenerdig mit dem Boden (86) ist.

5. Melkstand nach einem der voranstehenden Ansprüche, **dadurch gekennzeichnet, daß** die Stände (22, 24) einen Randstein (104, 106) längs der Bedienergrube (38) aufweisen und daß zusätzliche Lichtquellen (100, 102) entlang des Randsteins (104, 106) angeordnet sind,
vorzugsweise, daß die zusätzlichen Lichtquellen (100, 106) die Lichtstrahlen nach oben und diagonal in Richtung der Euter und weg von der Bedienergrube (38) lenken.

6. Melkstand nach einem der voranstehenden Ansprüche, **dadurch gekennzeichnet, daß** die Lichtquellen vom Euter entfernt entlang von Beleuchtungswegen angeordnet sind, die eine Mehrzahl von geradlinigen, durch die Körper der Kühe über den Eutern nicht blockierten Wegen aufweisen,
vorzugsweise, daß die geradlinigen Wege zwischen den Lichtquellen und den Eutern nicht durch einen anderen Teil der Kuh blockiert sind,
und/oder, vorzugsweise, daß die geradlinigen Wege zwischen den Lichtquellen und den Eutern nicht durch einen anderen Teil des Standes (22, 24) dazwischen blockiert sind.

## Revendications

1. Salle de traite comprenant une pluralité de stalles (22, 24) pour maintenir les vaches de telle façon que les mamelles des vaches soient accessibles à un opérateur dans une fosse, dans laquelle lesdites stalles (22, 24) ont des lumières (62, 64) éclairant directement lesdites mamelles pour que l'opérateur les voient
**caractérisée en ce que**
lesdites stalles (22, 24) ont des panneaux anti-éclaboussures (52) au niveau des croupes des vaches, et que lesdites lumières (62, 64) sont montées sur lesdits panneaux anti-éclaboussures (52) a un endroit au-dessus de la mamelle et en dessous du haut de la croupe.

2. Salle de traite selon la revendication 1,
**caractérisée en ce que**
lesdites lumières (62, 64) sont en dessous desdits panneaux anti-éclaboussures (52)
et/ou, de préférence, que lesdites stalles (22, 24) ont des coffrets (44, 46) avec un panneau de commande frontal (50) en face dudit opérateur, ledit panneau anti-éclaboussures (52) sur l'arrière faisant face à la croupe de la vache, et un fond (70) s'étendant entre ledit panneau de commande (50) et ledit panneau anti-éclaboussure (52) et faisant face vers le bas et ces dites lumières (62, 64) sont montées sur lesdits fonds du coffret (70).

3. Salle de traite selon la revendication 1 ou 2,
**caractérisée en ce que**
lesdites lumières (62, 64) dirigent les rayons lumineux vers le bas et en diagonale vers lesdites mamelles, de préférence, que ces dites lumières (62, 64) dirigent les rayons lumineux vers la mamelle d'une vache d'une stalle adjacente (22, 24).

4. Salle de traite selon l'une quelconque des revendications précédentes, **caractérisée en ce que** lesdites stalles (22, 24) ont un plancher (86), et que des lumières additionnelles (80, 82, 94) sont sur ledit plancher (86),
de préférence, que lesdites lumières additionnelles (80, 82, 84) dirigent les rayons lumineux vers le haut vers lesdites mamelles,
de plus encore, lesdites lumières additionnelles (80, 82, 84) ont ont une surface supérieure (88) qui affleure avec ledit plancher (86).

5. Salle de traite selon l'une quelconque des revendications précédentes,
**caractérisée en ce que**
lesdites stalles (22, 24) ont une bordure (104, 106) le long de ladite fosse, et que les lumières additionnelles (100, 102) sont le long de ladite bordure (104, 106),
de préférence, que lesdites lumières additionnelles (100, 102) dirigent les rayons lumineux vers le haut et en diagonale vers lesdites mamelles et à l'écart de ladite fosse.

6. Salle de traite selon l'une quelconque des revendications précédentes,
**caractérisée en ce que**
lesdites lumières sont espacées desdites mamelles le long de voies d'éclairage comprenant une pluralité de voies linéaires rectilignes non stoppes par le corps de la vache au-dessus de la mamelle,
de préférence, que lesdits chemins linéaires rectilignes entre lesdites lumières et lesdites mamelles soient non stoppes par aucune autre partie de la stalle qui placée entre.
